# EUROPEAN PATENT SPECIFICATION

(11) **EP 4 612 036 B1**
(45) Date of publication and mention of the grant of the patent: **07.10.2026**
(21) Application number: 23758531.0
(22) Date of filing: 15.08.2023
(51) Int. Cl.: B61G 9/22

(54) **SPACER ARRANGEMENT FOR A MOUNTING COMPARTMENT OF A RAIL VEHICLE AND METHOD FOR INSTALLING A DRAFT GEAR AND A SPACER ARRANGEMENT IN A MOUNTING COMPARTMENT**
ABSTANDHALTERANORDNUNG FÜR EINEN MONTAGERAUM EINES SCHIENENFAHRZEUGS UND VERFAHREN ZUR MONTAGE EINES ZUGES UND EINER ABSTANDHALTERANORDNUNG IN EINEM MONTAGERAUM
ARRANGEMENT D'ESPACEMENT POUR UN COMPARTIMENT DE MONTAGE D'UN VÉHICULE FERROVIAIRE ET PROCÉDÉ D'INSTALLATION D'UN APPAREIL DE CHOC ET DE TRACTION ET D'UN ARRANGEMENT D'ESPACEMENT DANS UN COMPARTIMENT DE MONTAGE

(30) Priority: 01.11.2022 SE 2251273
(43) Date of publication of application: 10.09.2025
(73) Proprietor: Dellner Couplers AB, 791 95 Falun (SE)
(72) Inventor: HANSEN, Alexander, 791 93 Falun (SE); JANÉRS, Anders, 791 95 Falun (SE)
(74) Representative: Brann AB
(86) International application number: PCT/EP2023/072460
(87) International publication number: WO 2024/094337

(56) References cited:
- EP-A1- 3 792 137
- DE-A1- 102022 109 046
- RU-U1- 184 612

## Description

### TECHNICAL FIELD

The present invention relates generally to coupler arrangements for rail vehicles. Especially, the invention relates to a spacer arrangement according to the preamble of claim 1 and a method for installing a draft gear and a spacer arrangement according to the preamble of claim 12.

### BACKGROUND

In a rail vehicle, energy absorbing devices such as draft gears are often used to absorb smaller forces that appear during operation of the rail vehicle. These forces are either traction forces pulling the rail vehicle in the direction of travel, or buff forces acting in the opposite direction, i.e. pushing against the rail vehicle. Typically elastomeric elements are provided for absorbing each of these forces. The most common type of elastomeric elements used are stacks of elastic rings or discs held on a central rod.

In each end, the rail vehicle normally has a respective mounting compartment for installing the draft gear. For efficiency reasons, the draft gears are preferably manufactured in a standardized size in terms length, width and depth. However, the size of the mounting compartment may vary somewhat between different rail vehicles, especially with respect to the length measure. Consequently, therefore, in some rail vehicles, a spacer arrangement must be fitted into an innermost portion of the mounting compartment to fill out a distance between the draft gear and an inner support surface of the mounting compartment.

Different kinds of spacer arrangement designs are known under the term "vehicle stops" from DE 10 2022 109 046 A1, DE 10 2022 109 189 A1, EP 3 792 137 A1, and RU 184 612 U1. DE 10 2022 109 046 A1 and DE 10 2022 109 189 A1 show draw and buffer devices for a traction coupling in a vehicle interface of a rail vehicle. Here, a first connection is adapted for a coupling shaft and a second connection is adapted for fastening the draw and buffer device to a vehicle structure. A spring device transmits tensile forces and compressive forces between the first connection and the second connections. A first pressure plate is arranged for introducing compressive forces in a first axial direction in the spring device and a second pressure plate is arranged for introducing compressive forces in the spring device in a second axial direction, which is opposite to the first axial direction. The spring device comprises at least two damping and/or resilient sub-devices arranged one behind the other in the first axial direction, and the second pressure plate is arranged in series with the first sub-device and the second sub-device in the first axial direction between the sub-devices so as to transmit compressive force. The first pressure plate has a free, and essentially flat contact surface, which is directed in the second axial direction, for free contact with an opposite contact surface of the coupling shaft, and the second pressure plate can be pivoted about a first axis of rotation, which is parallel to the contact surface of the first pressure plate is connected to the first connection. A third pressure plate is connected with high tensile strength to at least one vehicle stop in the area of the second connection of the draw and buffer device, so that the tensile forces are transmitted from the third pressure plate to the at least one vehicle stop in the vehicle interface. EP 3 792 137 A1 discloses a box-shaped spacer element inserted into a vehicle mounting recess as a unitary casting. RU 184 612 U1 discloses a stop element for an automatic railway coupler attached to the vehicle frame by riveted joints.

Although the above vehicle stops effectively fill out any space between the draft gear and the inner support surface of the mounting compartment, the known designs are incapable of successfully handling the forces sometimes being exerted on the draft gear during extreme buff cases that may occur during operation of today's rail vehicle couplers.

### SUMMARY

The object of the present invention is therefore to offer a solution that addresses the above problem and provides a reliable handling of extreme buff forces.

According to one aspect of the invention, the object is achieved by a spacer arrangement configured to be fitted into a mounting compartment of a rail vehicle in order to bridge a gap distance between an innermost portion of a draft gear and at least one support surface of the mounting compartment. The spacer arrangement contains two opposing side members and at least one pressure device. The two opposing side members are configured to transfer buff forces exerted on the draft gear to the at least one support surface of the mounting compartment, and contact a respective side wall of the mounting compartment. Each of the side walls is perpendicular to the at least one support surface of the mounting compartment. The at least one pressure device is positioned between the two opposing side members and is configured to apply a pretension force between the two opposing side members.

The above spacer arrangement is advantageous because the pretension force between the two opposing side members, which may either be applied in an attracting or repelling direction, renders the spacer arrangement more rigid and less inclined to buckle in response to extreme buff forces on the draft gear. The proposed spacer arrangement also avoids the need for welding the spacer arrangement to the mounting compartment, which is an alternative strategy to increase the overall rigidity of the design. Consequently, compared to welding, the installation is easier and quicker to complete. Of course, it is also less complicated to remove an already installed spacer arrangement should this be needed.

According to one embodiment of this aspect of the invention, the at least one pressure device is fixed to each of the two opposing side members. This is necessary if the at least one pressure device applies the pretension force in the attracting direction, i.e. the two opposing side members are pulled towards one another and away from the side walls of the mounting compartment. In the opposite case, however, when the at least one pressure device applies the pretension force in the repelling direction, such that the two opposing side members are pushed away from one another and against side walls of the mounting compartment, the at least one pressure device does not need to be fixed to any of the side members.

According to another embodiment of this aspect of the invention, the spacer arrangement contains at least two pressure devices, for example two, three or four, which are positioned between the two opposing side members at respective contact areas in a respective inner wall surface of each of the two opposing side members. Here, the respective contact areas are located relative to one another such that the pretension force is evenly distributed over the two opposing side members. This is advantageous with respect to the stability and resilience of the spacer arrangement.

According to yet another embodiment of this aspect of the invention, each of the two opposing side members includes a respective first ridge/groove interface configured to be connected to a respective second ridge/groove interface of the innermost portion of the draft gear. Hence, the risk is low that the position of the draft gear is shifted relative to the two opposing side members even if the coupler is subjected to loads being substantively stronger than what the coupler is designed to handle.

Preferably, each of the respective first ridge/groove interfaces contains a ridge member configured to be inserted into a groove member of a respective expanding mounting device of the innermost portion of the draft gear, and/or each of the respective first ridge/groove interfaces contains a groove member configured to receive a ridge member of the expanding mounting device of the innermost portion of the draft gear. Namely, intermediate expanding mounting devices further improves the overall flexibility of the design and enhances the mechanical connection between the draft gear and the spacer arrangement.

According to still another embodiment of this aspect of the invention, the spacer arrangement further contains a set of mounting members configured to hold the spacer arrangement in the mounting compartment. This is beneficial because it facilitates installing the spacer arrangement and holds the spacer arrangement in place in the desired position in the mounting compartment after installation.

For example, a first mounting member in the set of mounting members may be adapted to lock a position of a first one of the two opposing side members relative to a first side wall of the mounting compartment via one or more screw connections, and a second mounting member in the set of mounting members may be adapted to lock a position of a second one of the two opposing side members relative to a second side wall of the mounting compartment via one or more screw connections. This allows for a straightforward installation of the spacer arrangement.

According to another embodiment of this aspect of the invention, at least one of the two opposing side members has at least one weight-reducing cavity, e.g. in the form of a number of throughgoing holes. Thus, the spacer-arrangement weight may be lowered without significant strength reduction.

According to yet another embodiment of this aspect of the invention, the at least one pressure device includes a screw member contacting each of the two opposing side members, which screw member is configured to apply a repelling or an attracting force between the two opposing side members. Additionally, or alternatively, the at least one pressure device may include a worm gear arrangement contacting each of the two opposing side members, which worm gear arrangement is configured to apply a repelling or an attracting force between the two opposing side members. Additionally, or alternatively, the at least one pressure device may include a cam-spring arrangement fixed contacting each of the two opposing side members, which cam-spring arrangement is configured to apply a repelling or an attracting force between the two opposing side members. Thereby, depending on the implementation, a suitable means can be chosen for applying a desired pretension force between the two opposing side members.

According to another aspect of the invention, the object is achieved by a method for installing a draft gear and the proposed spacer arrangement in a mounting compartment of a rail vehicle. The method involves placing the spacer arrangement in the mounting compartment such that a respective first short side of each of the two opposing side members contacts the at least one support surface of the mounting compartment. The method also involves fastening the spacer arrangement to first and second side walls of the mounting compartment via a set of mounting members. The draft gear is then positioned in the mounting compartment such that an innermost portion of the draft gear contacts a respective second short side of each of the two opposing side members. The second short sides are here located on respective opposite sides of the opposing side members relative to first short sides. Further, the innermost portion of the draft gear is connected to the second short sides of the two opposing side members. Finally, the method involves adjusting the at least one pressure device to apply a pretension force between the two opposing side members. Consequently, a rail vehicle can be equipped with an extremely resilient draft gear in a very efficient and straightforward manner.

Further advantages, beneficial features and applications of the present invention will be apparent from the following description and the dependent claims.

### BRIEF DESCRIPTION OF THE DRAWINGS

The invention is now to be explained more closely by means of preferred embodiments, which are disclosed as examples, and with reference to the attached drawings.
- Figure 1: shows a mounting compartment according to one embodiment of the invention;
- Figure 2: shows a mounting compartment of Figure 1 in which a draft gear and a spacer arrangement according to one embodiment of the invention have been installed;
- Figures 3a-c: illustrate the spacer arrangement according to a first embodiment of the invention;
- Figures 4a-c: illustrate expansion elements being connected to the proposed spacer arrangement according to one embodiment of the invention;
- Figure 5: shows a draft gear that is connected to the spacer arrangement of Figures 3a-c by means of expansion elements;
- Figure 6: illustrates the spacer arrangement according to a second embodiment of the invention;
- Figure 7: illustrates the spacer arrangement according to a third embodiment of the invention;
- Figure 8: illustrates the spacer arrangement according to a fourth embodiment of the invention; and
- Figure 9: illustrates, by means of a flow diagram, the general method according to the invention for installing a draft gear and the proposed spacer arrangement in a mounting compartment.

### DETAILED DESCRIPTION

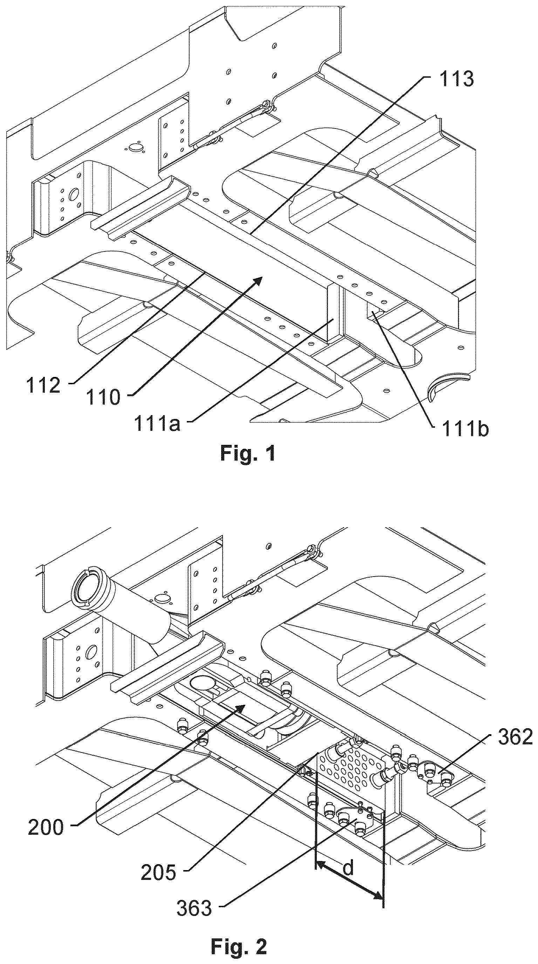

Figure 1 schematically illustrates a rail vehicle 100 having a mounting compartment 110 into which a spacer arrangement 300 according to the invention is installable. Figure 2 shows the mounting compartment 110 of Figure 1 in which a draft gear 200 and a spacer arrangement 300 according to one embodiment of the invention have been installed.

The main purpose of the spacer arrangement 300 according to the invention is to bridge a gap distance d between an innermost portion 205 of the draft gear 200 and at least one support surface of the mounting compartment 110. Figure 1 shows two such support surfaces in the form of 111a and 111b respectively. Naturally, as one alternative, a single unbroken wall may for example constitute the support surface of the mounting compartment 110.

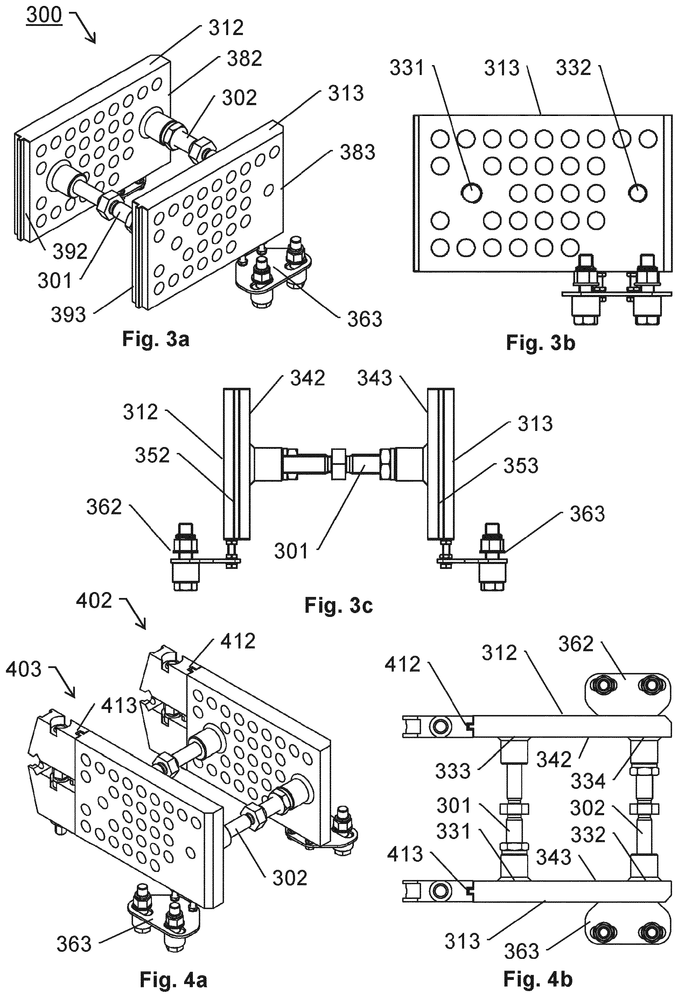

Referring now also to Figures 3a, 3b and 3c, which illustrate a spacer arrangement according to a first embodiment of the invention, the spacer arrangement 300 contains two opposing side members 312 and 313 respectively and at least one pressure device 301 and 302 respectively.

The two opposing side members 312 and 313 are configured to transfer buff forces exerted on the draft gear 200 to the at least one support surface 111a and 111b of the mounting compartment 110. To this aim, each of the two opposing side members 312 and 313 is configured to contact a respective side wall 112 and 113 of the mounting compartment 110, and each of the two opposing side members 312 and 313 is oriented with its respective long sides parallel to the side walls 112 and 113, which each is perpendicular to the at least one support surface 111a and 111b of the mounting compartment 110.

Specifically, a respective first short side 382 and 383 of each of the two opposing side members 312 and 313 is adapted to contact the at least one support surface 111a and 111b respectively of the mounting compartment 110, and a respective second short side 392 and 393 of each of the two opposing side members 312 and 313 is adapted to contact the innermost portion 205 of a draft gear 200, which may be represented by an expansion element as will be discussed below. Thereby, when the spacer arrangement 300 is fitted into the mounting compartment 110 as shown in Figu-re 2, any buff forces exerted on the draft gear 200 are transferred via the spacer arrangement 300 to the at least one support surface 111a and 111b of the mounting compartment 110.

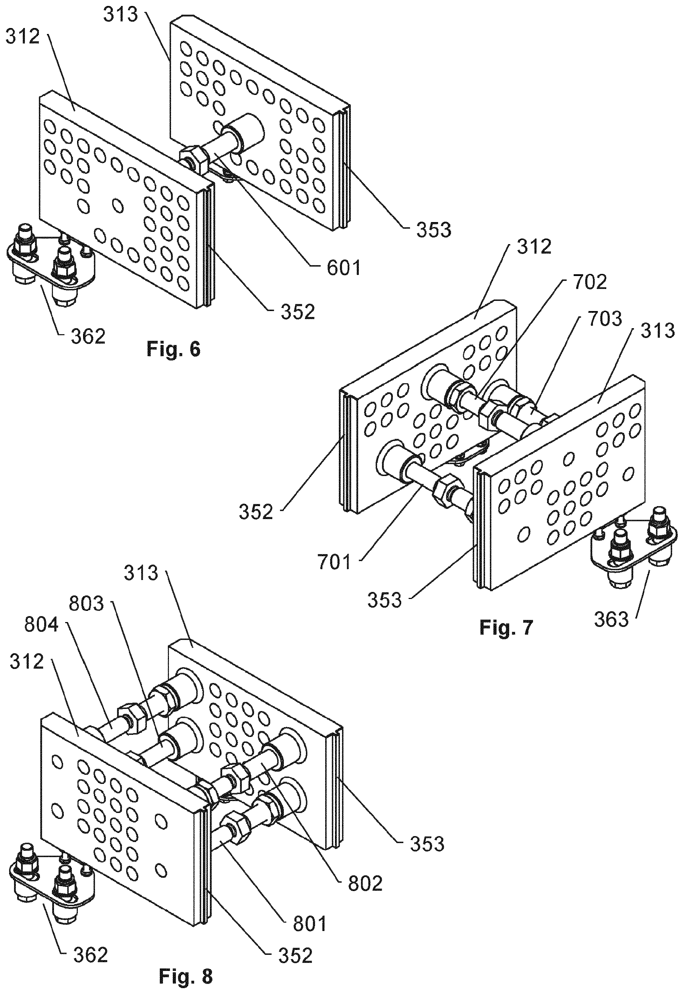

In order to reduce the risk that the spacer arrangement 300 buckles, or by other means is plastically deformed, due to the buff forces the spacer arrangement 300 includes at least one pressure device that is positioned between the two opposing side members 312 and 313, and which at least one pressure device is configured to apply a pretension force between the two opposing side members 312 and 313. Figures 3a - 3c exemplify the at least one pressure device by a pair of screw members 301 and 302 contacting each of the two opposing side members 312 and 313. As will be discussed below with reference to Figures 6, 7 and 8 other numbers of pressure devices are also conceivable according to embodiments of the invention.

The pretension applied by the at least one pressure device, which may either produce a repelling or an attracting force between the two opposing side members 312 and 313, increases the overall rigidity of the spacer arrangement 300 and thus reduces the risk of deformation thereof.

According to one embodiment of the invention, the at least one pressure device 301 and 302 is fixed to each of the two opposing side members 312 and 313, for example as illustrated in Figure 3b by means of threaded holes 331 and 332 through the side member 313 into which threaded holes 331 and 332 the pressure devices 301 and 302 respectively are screwed in.

Such fixation of the pressure devices 301 and 302 is necessary if these devices are configured to apply the pretension force in an attracting direction wherein the two opposing side members 312 and 313 are pulled towards one another and away from the side walls 112 and 113 of the mounting compartment 110.

Even though, for practical reasons, it may be generally advantageous to fix the at least one pressure device 301 and 302 to the two opposing side members 312 and 313 this is not actually needed if the at least one pressure device 301 and 302 is configured to apply the pretension force in a repelling direction wherein the two opposing side members 312 and 313 are pushed away from one another and against the side walls 112 and 113 of the mounting compartment 110. Namely, in this case, it is possible that the spacer arrangement 300 is held in position in the mounting compartment 110 by the static friction between the outer sides of the two opposing side members 312 and 313 and the side walls 112 and 113.

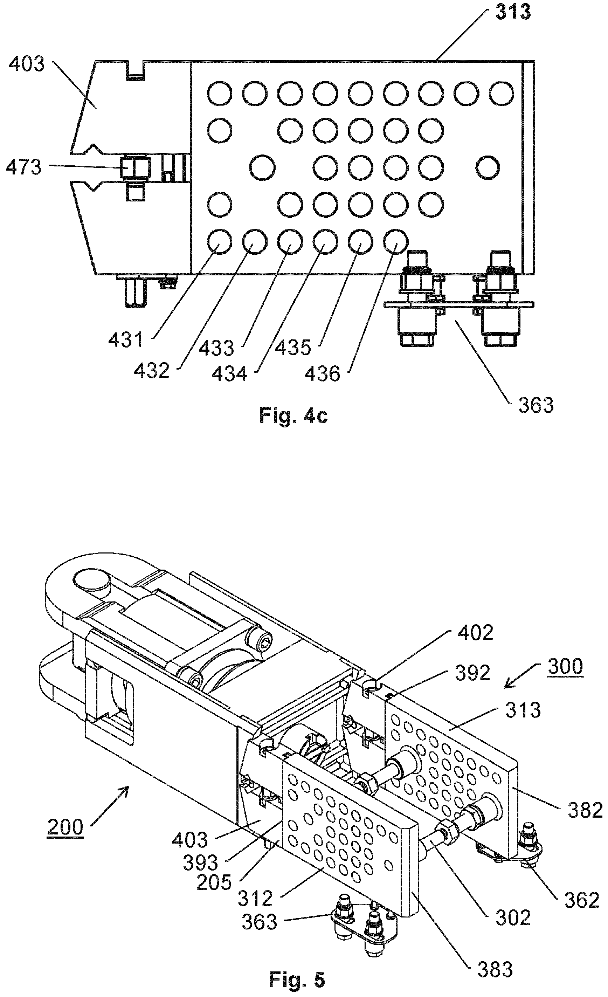

Figures 4a, 4b and 4c illustrate one embodiment of the invention, wherein the two opposing side members 312 and 313 respectively of the spacer arrangement 300 are configured to be connected to expansion elements 402 and 403, which, in turn, are arranged to be connected to the innermost portion 205 of the draft gear 200. Preferably, each of the expansion elements 402 and 403 has a double wedge-shaped profile adapted to be fitted into a respective concave profile of the innermost portion 205 of the draft gear 200 as shown in Figure 5. Thus, after fitting the expansion element 403 into the concave profile of the innermost portion 205 of the draft gear 200, the expansion element 403 may be clamped into fixation against said innermost portion 205 by adjusting an expansion bolt 473 between two pieces of the double wedge-shaped profile, which expansion bolt 473 is configured to control the mutual distance between said two pieces.

To secure the expansion elements 402 and 403 to the spacer arrangement 300, according to one embodiment of the invention, each of the two opposing side members 312 and 313 contains a respective first ridge/groove interface 352 and 353 as illustrated in Figure 3c. The first ridge/groove interface 352 and 353 is configured to be connected to a respective second ridge/groove interface 412 and 413 of the innermost portion 205 of the draft gear 200, which in Figures 4a and 4b is exemplified by the above-described expansion elements 402 and 403.

Each of the respective first ridge/groove interfaces 352 and 353 may contain the ridge member 352 and 353 respectively, which is configured to be inserted into the groove member 412 and 413 respectively of the respective expanding mounting device 402 and 403 of the innermost portion 205 of the draft gear 200. Alternatively, or in addition thereto, each of the respective first ridge/ groove interfaces may 352 and 353 contain a groove member, which is configured to receive a ridge member of the expanding mounting devices 402 and 403 respectively of the innermost portion 205 of the draft gear 200. Thus, by interconnection through one or more pairs of ridges and grooves of the ridge/groove interfaces 352 and 353, each of the expansion elements 402 and 403 is fastened to the two opposing side members 312 and 313 of the spacer arrangement 300.

Figure 4c illustrates one embodiment of the invention where at least one of the two opposing side members 313 includes at least one cavity, here exemplified by 431, 432, 433, 434, 435 and 436 respectively, which has a weight-reducing function. I.e. material has been removed from the side member 313 to lower its weight, for example by drilling one or more holes through the side member 313. However, of course, alternative means of reducing the weight of the spacer arrangement 300 are conceivable according to embodiments of the invention, such as drilling/milling one or more recesses in at least one of the two opposing side members 312 and 313 and/or manufacturing these structural elements in framework technology.

Figure 6 illustrates a second embodiment according to the invention, where the spacer arrangement 300 contains a single pressure device in the form of a screw member 601 between the two opposing side members 312 and 313. To distribute the pretension force as evenly as possible over the two opposing side members 312 and 313, the screw member 601 is preferably positioned such that it contacts respective central areas of the inner walls of the two opposing side members 312 and 313.

Figure 7 illustrates the spacer arrangement 300 according to a third embodiment of the invention, where instead three pressure devices in the form of screw members 701, 702 and 703 are arranged between the two opposing side members 312 and 313. Analogous to the above, the screw members 701, 702 and 703 are preferably positioned such that they contact different respective areas of the inner walls of the two opposing side members 312 and 313 so that the overall pretension force is distributed as evenly as possible over the two opposing side members 312 and 313. For example, this may mean that first and third screw members 701 and 703 respectively are arranged relatively close first and second short sides and close to a first long side of each of the two opposing side members 312 and 313, and a second screw member 702 is arranged close to a midpoint of a second long side of each of the two opposing side members 312 and 313.

Figure 8 illustrates the spacer arrangement 300 according to a fourth embodiment of the invention, where four pressure devices in the form of screw members 801, 802, 803 and 804 respectively are arranged between the two opposing side members 312 and 313. Again, the screw members 801, 802, 803 and 804 are preferably arranged so that to the overall pretension force is distributed as evenly as possible over the two opposing side members 312 and 313. Thus, each of the screw members 801, 802, 803 and 804 may contact a respective area of the inner walls of the two opposing side members 312 and 313, which respective area is close to a particular one of the corners of the two opposing side members 312 and 313.

In the light of the above, it should however be noted that it may also be advantageous to arrange the pressure devices somewhat differently to allow room for one or more parts of the draft gear 200 to move between the two opposing side members 312 and 313 when absorbing buff forces from the coupler.

Moreover, according to embodiments of the invention, one or more of the above screw members may be replaced by an alternative pressure device, such as worm gear arrangement or a cam-spring arrangement contacting each of the two opposing side members, which alternative pressure device contacts each of the two opposing side members 312 and 313 and is configured to apply either a repelling or an attracting force between the two opposing side members 312 and 313.

Referring now to all the Figures 2 to 8, according to embodiments of the invention, the spacer arrangement 300 contains a set of mounting members 362 and 363 respectively, which are configured to hold the spacer arrangement 300 in the mounting compartment 110. Preferably, each mounting member 362 and 363, in turn, includes at least one screw configured to be screwed to a beam or similar structural element near the mounting compartment 110. Specifically, a first mounting member 362 may be adapted to lock a position of a first one 312 of the two opposing side members relative to a first side wall 112 of the mounting compartment 110, and a second mounting member 363 may be adapted to lock a position of a second one 313 of the two opposing side members relative to a second side wall 113 of the mounting compartment 110 as shown in Figure 2.

The mounting members 362 and 363 are beneficial because they facilitate installing the spacer arrangement 300 in the mounting compartment 110. The mounting members 362 and 363 also hold the spacer arrangement 300 in place in the desired position in the mounting compartment 110 after installation.

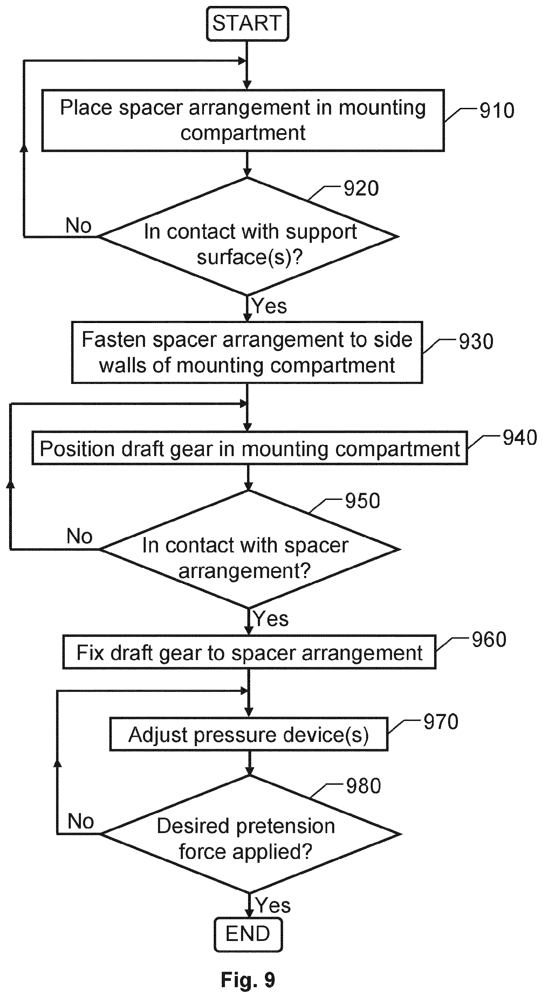

Figure 9 illustrates, by means of a flow diagram, the general method according to the invention for installing a draft gear and the proposed spacer arrangement 300 in a mounting compartment 110 of a rail vehicle.

In a first step 910, the spacer arrangement 300 is placed in the mounting compartment 110. In a step 920 thereafter, it is checked if a respective first short side 382 and 383 of each of the two opposing side members 312 and 313 contacts the at least one support surface 111a and 111b of the mounting compartment 110. If so, a step 930 follows; and otherwise, the procedure loops back to step 910.

In step 930, the spacer arrangement 300 is fastened to first and second side walls 112 and 113 of the mounting compartment 110, for example via a set of mounting members 362 and 363.

Then, in step 940, the draft gear 200 is positioned in the mounting compartment 110. Subsequently, in a step 950, it is checked if the draft gear 200 is in adequate contact with the spacer arrangement 300. If so, a step 960 follows; and otherwise, the procedure loops back to step 940. For example, adequate contact may mean that an innermost portion 205 of the draft gear 200 contacts a respective second short side 392 and 393 of each of the two opposing side members 312 and 313, which second short sides 392 and 393 are located on respective opposite sides of the opposing side members 312 and 313 relative to said first short sides 382 and 383.

In step 960, the draft gear 200 is fixed to the spacer arrangement 300 by connecting the innermost portion 205 of the draft gear 200 to the second short sides 392 and 393 of the two opposing side members 312 and 313. Thereafter, the procedure ends.

In a following step 970, the at least one pressure device of the spacer arrangement 300 is adjusted to apply a repelling/attracting pretension force between the two opposing side members 312 and 313; and in a step 980 thereafter, it is checked if the desired pretension force is applied. If so, the procedure ends; and otherwise, the procedure loops back to step 970.

As mentioned above, the second short sides 392 and 393 of the two opposing side members 312 and 313 may contain a respective first ridge/groove interface 352 and 353, and the innermost portion 205 of the draft gear 200 may contain a second ridge/ groove interface 412 and 413 configured to be fitted into the respective first ridge/groove interface 352 and 353. Thus, connecting of the innermost portion 205 of the draft gear 200 to the second short sides 392 and 393 of the two opposing side members 312 and 313 may involve fitting the first and second ridge/groove interfaces 352, 353 and 412, 413 respectively into one another.

Variations to the disclosed embodiments can be understood and effected by those skilled in the art in practicing the claimed invention, from a study of the drawings, the disclosure, and the appended claims.

The term "comprises/comprising" when used in this specification is taken to specify the presence of stated features, integers, steps or components. The term does not preclude the presence or addition of one or more additional elements, features, integers, steps or components or groups thereof. The indefinite article "a" or "an" does not exclude a plurality. In the claims, the word "or" is not to be interpreted as an exclusive or (sometimes referred to as "XOR"). On the contrary, expressions such as "A or B" covers all the cases "A and not B", "B and not A" and "A and B", unless otherwise indicated. The mere fact that certain measures are recited in mutually different dependent claims does not indicate that a combination of these measures cannot be used to advantage. Any reference signs in the claims should not be construed as limiting the scope.

It is also to be noted that features from the various embodiments described herein may freely be combined, unless it is explicitly stated that such a combination would be unsuitable.

The invention is not restricted to the described embodiments in the figures, but may be varied freely within the scope of the claims.

## Claims

1. A spacer arrangement (300) configured to be fitted into a mounting compartment (110) of a rail vehicle in order to bridge a gap distance (d) between an innermost portion (205) of a draft gear (200) and at least one support surface (111a; 111b) of the mounting compartment (110), which spacer arrangement (300) comprises:
two opposing side members (312; 313) configured to:
transfer buff forces exerted on the draft gear (200) to the at least one support surface (111a; 111b) of the mounting compartment (110), and
contact a respective side wall (112; 113) of the mounting compartment (110), which side walls (112; 113) each is perpendicular to the at least one support surface (111a; 111b) of the mounting compartment (110),
**characterized in that** the spacer arrangement (300) comprises:
at least one pressure device (301, 302; 601; 701, 702, 703; 801, 802, 803, 804) positioned between the two opposing side members (312; 313) and configured to apply a pretension force between the two opposing side members (312; 313).

2. The spacer arrangement (300) according to claim 1, wherein the at least one pressure device (301, 302; 601; 701, 702, 703; 801, 802, 803, 804) is fixed to each of the two opposing side members (312; 313).

3. The spacer arrangement (300) according to claim 2, wherein the at least one pressure device (301, 302; 601; 701, 702, 703; 801, 802, 803, 804) is configured to apply the pretension force in an attracting direction pulling the two opposing side members (312; 313) towards one another and away from the side walls (112; 113) of the mounting compartment (110).

4. The spacer arrangement (300) according to any one of the claims 1 or 2, wherein the at least one pressure device (301, 302; 601; 701, 702, 703; 801, 802, 803, 804) is configured to apply the pretension force in a repelling direction pushing the two opposing side members (312; 313) away from one another and against side walls (112; 113) of the mounting compartment (110).

5. The spacer arrangement (300) according to any one of the preceding claims, comprising:
at least two pressure devices (301, 302; 601; 701, 702, 703; 801, 802, 803, 804) that are positioned between the two opposing side members (312; 313) at respective contact areas (331, 333; 332, 334) in a respective inner wall surface (342, 343) of each of the two opposing side members (312; 313), which respective contact areas (331, 333; 332, 334) are located relative to one another such that the pretension force is evenly distributed over the two opposing side members (312; 313).

6. The spacer arrangement (300) according to any one of the preceding claims, wherein each of the two opposing side members (312; 313) comprises:
a respective first ridge/groove interface (352; 353) configured to be connected to a respective second ridge/groove interface (412, 413) of the innermost portion (205) of the draft gear (200).

7. The spacer arrangement (300) according to claim 6, wherein each of the respective first ridge/groove interfaces comprises:
a ridge member (352; 353) configured to be inserted into a groove member (412, 413) of a respective expanding mounting device (402; 403) of the innermost portion (205) of the draft gear (200), and/or
a groove member configured to receive a ridge member of the expanding mounting device (402; 403) of the innermost portion (205) of the draft gear (200).

8. The spacer arrangement (300) according to any one of the preceding claims, further comprising a set of mounting members (362; 363) configured to hold the spacer arrangement (300) in the mounting compartment (110).

9. The spacer arrangement (300) according to claim 8, wherein: a first mounting member (362) in the set of mounting members (362; 363) is adapted to lock a position of a first one (312) of the two opposing side members relative to a first side wall (112) of the mounting compartment (110), and
a second mounting member (363) in the set of mounting members (362; 363) is adapted to lock a position of a second one (313) of the two opposing side members relative to a second side wall (113) of the mounting compartment (110).

10. The spacer arrangement (300) according to any one of the preceding claims, wherein at least one of the two opposing side members (312; 313) comprises at least one weight-reducing cavity (431, 432, 433, 434, 435, 436).

11. The spacer arrangement (300) according to any one of the preceding claims, wherein the at least one pressure device (301, 302; 601; 701, 702, 703; 801, 802, 803, 804) comprises at least one of:
a screw member contacting each of the two opposing side members (312, 313), which screw member is configured to apply a repelling or an attracting force between the two opposing side members,
a worm gear arrangement contacting each of the two opposing side members, which worm gear arrangement is configured to apply a repelling or an attracting force between the two opposing side members (312, 313), and
a cam-spring arrangement contacting each of the two opposing side members, which cam-spring arrangement is configured to apply a repelling or an attracting force between the two opposing side members (312, 313).

12. Method for installing a draft gear (200) and the spacer arrangement (300) according to any one of the preceding claims in a mounting compartment (110) of a rail vehicle, the method comprising:
placing the spacer arrangement (300) in the mounting compartment (110) such that a respective first short side (382; 383) of each of the two opposing side members (312, 313) contacts the at least one support surface (111a; 111b) of the mounting compartment (110),
fastening the spacer arrangement (300) to first and second side walls (112; 113) of the mounting compartment (110) via a set of mounting members (362; 363),
**characterized by:**
positioning the draft gear (200) in the mounting compartment (110) such that an innermost portion (205) of the draft gear (200) contacts a respective second short side (392; 393) of each of the two opposing side members (312, 313), which second short sides (392; 393) are located on respective opposite sides of the opposing side members (312, 313) relative to said first short sides (382; 383);
connecting the innermost portion (205) of the draft gear (200) to the second short sides (392; 393) of the two opposing side members (312, 313); and
adjusting the at least one pressure device (301, 302; 601; 701, 702, 703; 801, 802, 803, 804) to apply a pretension force between the two opposing side members (312; 313).

13. The method according to claim 12, wherein the second short sides (392; 393) of the two opposing side members (312, 313) comprises a respective first ridge/groove interface (352; 353), the innermost portion (205) of the draft gear (200) comprises a second ridge/groove interface (412, 413) configured to be fitted into the respective first ridge/groove interface (352; 353), and the connecting of the innermost portion (205) of the draft gear (200) to the second short sides (392; 393) of the two opposing side members (312, 313) comprises:
fitting the first and second ridge/groove interfaces (352, 353; 412, 413) into one another.

## Patentansprüche

1. Abstandhalteranordnung (300), die dazu konfiguriert ist, in ein Montagefach (110) eines Schienenfahrzeugs eingebaut zu werden, um einen Spaltabstand (d) zwischen einem innersten Abschnitt (205) eines Zuggetriebes (200) und mindestens einer Auflagefläche (111a; 111b) des Montagefachs (110) zu überbrücken, wobei die Abstandhalteranordnung (300) Folgendes umfasst:
zwei gegenüberliegende Seitenelemente (312; 313), die zu Folgendem konfiguriert sind:
Übertragen von auf das Zuggetriebe (200) einwirkenden Kräften auf die mindestens eine Auflagefläche (111a; 111b) des Montagefachs (110), und
Inkontaktstehen mit einer jeweiligen Seitenwand (112; 113) des Montagefachs (110), wobei die Seitenwände (112; 113) jeweils senkrecht zu der mindestens einen Auflagefläche (111a; 111b) des Montagefachs (110) stehen,
**dadurch gekennzeichnet, dass** die Abstandhalteranordnung (300) Folgendes umfasst:
mindestens eine Druckvorrichtung (301, 302; 601; 701, 702, 703; 801, 802, 803, 804), die zwischen den zwei gegenüberliegenden Seitenelementen (312; 313) positioniert und dazu konfiguriert ist, eine Vorspannkraft zwischen den zwei gegenüberliegenden Seitenelementen (312; 313) auszuüben.

2. Abstandhalteranordnung (300) nach Anspruch 1, wobei die mindestens eine Druckvorrichtung (301, 302; 601; 701, 702, 703; 801, 802, 803, 804) an jedem der zwei gegenüberliegenden Seitenelemente (312; 313) befestigt ist.

3. Abstandhalteranordnung (300) nach Anspruch 2, wobei die mindestens eine Druckvorrichtung (301, 302; 601; 701, 702, 703; 801, 802, 803, 804) dazu konfiguriert ist, die Vorspannkraft in einer anziehenden Richtung, welche die zwei gegenüberliegenden Seitenelemente (312; 313) aufeinander zu und weg von den Seitenwänden (112; 113) des Montagefachs (110) zieht, auszuüben.

4. Abstandhalteranordnung (300) nach einem der Ansprüche 1 oder 2, wobei die mindestens eine Druckvorrichtung (301, 302; 601; 701, 702, 703; 801, 802, 803, 804) dazu konfiguriert ist, die Vorspannkraft in einer abstoßenden Richtung, welche die zwei gegenüberliegenden Seitenelemente (312; 313) voneinander weg und gegen die Seitenwände (112; 113) des Montagefachs (110) drückt, auszuüben.

5. Abstandhalteranordnung (300) nach einem der vorhergehenden Ansprüche, umfassend:
mindestens zwei Druckvorrichtungen (301, 302; 601; 701, 702, 703; 801, 802, 803, 804) die zwischen den zwei gegenüberliegenden Seitenelementen (312; 313) an jeweiligen Kontaktbereichen (331, 333; 332, 334) in einer jeweiligen Innenwandfläche (342, 343) jedes der zwei gegenüberliegenden Seitenelemente (312; 313) positioniert sind, wobei sich die jeweiligen Kontaktbereiche (331, 333; 332, 334) so relativ zueinander befinden, dass die Vorspannkraft gleichmäßig über die zwei gegenüberliegenden Seitenelemente (312; 313) verteilt ist.

6. Abstandhalteranordnung (300) nach einem der vorhergehenden Ansprüche, wobei jedes der zwei gegenüberliegenden Seitenelemente (312; 313) Folgendes umfasst:
eine jeweilige erste Grat-/Nutschnittstelle (352; 353), die dazu konfiguriert ist, mit einer jeweiligen zweiten Grat-/Nutschnittstelle (412, 413) des innersten Abschnitts (205) des Zuggetriebes (200) verbunden zu werden.

7. Abstandhalteranordnung (300) nach Anspruch 6, wobei jede der jeweiligen ersten Grat-/Nutschnittstellen Folgendes umfasst:
ein Gratelement (352; 353), das dazu konfiguriert ist, in ein Nutelement (412, 413) einer jeweiligen Spreizmontagevorrichtung (402; 403) des innersten Abschnitts (205) des Zuggetriebes (200) eingesetzt zu werden, und/oder
ein Nutelement, das dazu konfiguriert ist, ein Gratelement der Spreizmontagevorrichtung (402; 403) des innersten Abschnitts (205) des Zuggetriebes (200) zu empfangen.

8. Abstandhalteranordnung (300) nach einem der vorhergehenden Ansprüche, ferner umfassend einen Satz von Montageelementen (362; 363), der dazu konfiguriert ist, die Abstandhalteranordnung (300) in dem Montagefach (110) zu halten.

9. Abstandhalteranordnung (300) nach Anspruch 8, wobei: ein erstes Montageelement (362) in dem Satz von Montageelementen (362; 363) dazu ausgelegt ist, eine Position eines ersten (312) der zwei gegenüberliegenden Seitenelemente relativ zu einer ersten Seitenwand (112) des Montagefachs (110) zu arretieren, und
ein zweites Montageelement (363) in dem Satz von Montageelementen (362; 363) dazu ausgelegt ist, eine Position eines zweiten (313) der zwei gegenüberliegenden Seitenelemente relativ zu einer zweiten Seitenwand (113) des Montagefachs (110) zu arretieren.

10. Abstandhalteranordnung (300) nach einem der vorhergehenden Ansprüche, wobei mindestens eines der zwei gegenüberliegenden Seitenelemente (312; 313) mindestens einen gewichtsreduzierenden Hohlraum (431, 432, 433, 434, 435, 436) umfasst.

11. Abstandhalteranordnung (300) nach einem der vorhergehenden Ansprüche, wobei die mindestens eine Druckvorrichtung (301, 302; 601; 701, 702, 703; 801, 802, 803, 804) mindestens eines von Folgenden umfasst:
ein Schraubenelement, das mit jedem der zwei gegenüberliegenden Seitenelemente (312, 313) in Kontakt steht, wobei das Schraubenelement dazu konfiguriert ist, eine abstoßende oder eine anziehende Kraft zwischen den zwei gegenüberliegenden Seitenelementen auszuüben,
eine Schneckengetriebeanordnung, die mit jedem der zwei gegenüberliegenden Seitenelemente in Kontakt steht, wobei die Schneckengetriebeanordnung dazu konfiguriert ist, eine abstoßende oder eine anziehende Kraft zwischen den zwei gegenüberliegenden Seitenelementen (312, 313) auszuüben, und
eine Nockenfederanordnung, die mit jedem der zwei gegenüberliegenden Seitenelemente in Kontakt steht, wobei die Nockenfederanordnung dazu konfiguriert ist, eine abstoßende oder eine anziehende Kraft zwischen den zwei gegenüberliegenden Seitenelementen (312, 313) auszuüben.

12. Verfahren zum Installieren eines Zuggetriebes (200) und der Abstandhalteranordnung (300) nach einem der vorhergehenden Ansprüche in einem Montagefach (110) eines Schienenfahrzeugs, wobei das Verfahren Folgendes umfasst:
Platzieren der Abstandhalteranordnung (300) in dem Montagefach (110), sodass eine jeweilige erste kurze Seite (382; 383) jedes der zwei gegenüberliegenden Seitenelemente (312, 313) mit der mindestens einen Auflagefläche (111a; 111b) des Montagefachs (110) in Kontakt steht,
Befestigen der Abstandhalteranordnung (300) an der ersten und der zweiten Seitenwand (112; 113) des Montagefachs (110) über einen Satz von Montageelementen (362; 363),
**gekennzeichnet durch** Folgendes:
Positionieren des Zuggetriebes (200) in dem Montagefach (110), sodass ein innerster Abschnitt (205) des Zuggetriebes (200) mit einer jeweiligen zweiten kurzen Seite (392; 393) jedes der zwei gegenüberliegenden Seitenelemente (312, 313) in Kontakt steht, wobei sich die zweiten kurzen Seiten (392; 393) auf jeweiligen gegenüberliegenden Seiten der gegenüberliegenden Seitenelemente (312, 313) relativ zu den ersten kurzen Seiten (382; 383) befinden;
Verbinden des innersten Abschnitts (205) des Zuggetriebes (200) mit den zweiten kurzen Seiten (392; 393) der zwei gegenüberliegenden Seitenelemente (312, 313); und
Anpassen der mindestens einen Druckvorrichtung (301, 302; 601; 701, 702, 703; 801, 802, 803, 804), um eine Vorspannkraft zwischen den zwei gegenüberliegenden Seitenelementen (312; 313) auszuüben.

13. Verfahren nach Anspruch 12, wobei die zweiten kurzen Seiten (392; 393) der zwei gegenüberliegenden Seitenelemente (312, 313) eine jeweilige erste Grat-/Nutschnittstelle (352; 353) umfasst, der innerste Abschnitt (205) des Zuggetriebes (200) eine zweite Grat-/Nutschnittstelle (412, 413), die dazu konfiguriert ist, in die jeweilige erste Grat-/Nutschnittstelle (352; 353) eingebaut zu werden, umfasst und das Verbinden des innersten Abschnitts (205) des Zuggetriebes (200) mit den zweiten kurzen Seiten (392; 393) der zwei gegenüberliegenden Seitenelemente (312, 313) Folgendes umfasst:
Einbauen der ersten und der zweiten Grat-/Nutschnittstelle (352, 353; 412, 413) ineinander.

## Revendications

1. Agencement d'entretoise (300) configuré pour être adapté dans un compartiment de montage (110) d'un véhicule ferroviaire afin de combler une distance d'écartement (d) entre une partie la plus interne (205) d'un appareil de choc et de traction (200) et au moins une surface de support (111a ; 111b) du compartiment de montage (110), ledit agencement d'entretoise (300) comprenant :
deux éléments latéraux opposés (312 ; 313) configurés pour :
transférer des forces de compression exercées sur l'appareil de choc et de traction (200) à l'au moins une surface de support (111a ; 111b) du compartiment de montage (110), et
entrer en contact avec une paroi latérale (112 ; 113) respective du compartiment de montage (110), lesdites parois latérales (112 ; 113) étant chacune perpendiculaires à l'au moins une surface de support (111a ; 111b) du compartiment de montage (110),
**caractérisé en ce que** l'agencement d'entretoise (300) comprend : au moins un dispositif de pression (301, 302 ; 601 ; 701, 702, 703 ; 801, 802, 803, 804) positionné entre les deux éléments latéraux opposés (312 ; 313) et configuré pour appliquer une force de prétension entre les deux éléments latéraux opposés (312 ; 313).

2. Agencement d'entretoise (300) selon la revendication 1, dans lequel l'au moins un dispositif de pression (301, 302 ; 601 ; 701, 702, 703 ; 801, 802, 803, 804) est fixé à chacun des deux éléments latéraux opposés (312 ; 313).

3. Agencement d'entretoise (300) selon la revendication 2, dans lequel l'au moins un dispositif de pression (301, 302 ; 601 ; 701, 702, 703 ; 801, 802, 803, 804) est configuré pour appliquer la force de prétension dans une direction d'attraction tirant les deux éléments latéraux opposés (312 ; 313) l'un vers l'autre et en éloignement des parois latérales (112 ; 113) du compartiment de montage (110).

4. Agencement d'entretoise (300) selon l'une quelconque des revendications 1 ou 2, dans lequel l'au moins un dispositif de pression (301, 302 ; 601 ; 701, 702, 703 ; 801, 802, 803, 804) est configuré pour appliquer la force de prétension dans une direction de répulsion poussant les deux éléments latéraux opposés (312 ; 313) en éloignement l'un de l'autre et contre les parois latérales (112 ; 113) du compartiment de montage (110).

5. Agencement d'entretoise (300) selon l'une quelconque des revendications précédentes, comprenant :
au moins deux dispositifs de pression (301, 302 ; 601 ; 701, 702, 703 ; 801, 802, 803, 804)
qui sont positionnés entre les deux éléments latéraux opposés (312 ; 313) au niveau de zones de contact (331, 333 ; 332, 334) respectives dans une surface de paroi interne (342, 343) respective de chacun des deux éléments latéraux opposés (312 ; 313), lesdites zones de contact (331, 333 ; 332, 334) respectives étant situées l'une par rapport à l'autre de sorte que la force de prétension est répartie uniformément sur les deux éléments latéraux opposés (312 ; 313).

6. Agencement d'entretoise (300) selon l'une quelconque des revendications précédentes, dans lequel chacun des deux éléments latéraux opposés (312 ; 313) comprend :
une première interface nervure/rainure (352 ; 353) respective configurée pour être raccordée à une deuxième interface nervure/rainure (412, 413) respective de la partie la plus interne (205) de l'appareil de choc et de traction (200).

7. Agencement d'entretoise (300) selon la revendication 6, dans lequel chacune des premières interfaces nervure/rainure respectives comprend :
un élément nervure (352 ; 353) configuré pour être inséré dans un élément rainure (412, 413) d'un dispositif de montage extensible (402 ; 403) respectif de la partie la plus interne (205) de l'appareil de choc et de traction (200), et/ou
un élément rainure configuré pour recevoir un élément nervure du dispositif de montage extensible (402 ; 403) de la partie la plus interne (205) de l'appareil de choc et de traction (200).

8. Agencement d'entretoise (300) selon l'une quelconque des revendications précédentes, comprenant en outre un ensemble d'éléments de montage (362 ; 363) configuré pour maintenir l'agencement d'entretoise (300) dans le compartiment de montage (110).

9. Agencement d'entretoise (300) selon la revendication 8, dans lequel : un premier élément de montage (362) dans l'ensemble d'éléments de montage (362 ; 363) est adapté pour verrouiller une position d'un premier (312) des deux éléments latéraux opposés par rapport à une première paroi latérale (112) du compartiment de montage (110), et
un deuxième élément de montage (363) dans l'ensemble d'éléments de montage (362 ; 363) est adapté pour verrouiller une position d'un deuxième (313) des deux éléments latéraux opposés par rapport à une deuxième paroi latérale (113) du compartiment de montage (110).

10. Agencement d'entretoise (300) selon l'une quelconque des revendications précédentes, dans lequel au moins l'un des deux éléments latéraux opposés (312 ; 313) comprend au moins une cavité de réduction de poids (431, 432, 433, 434, 435, 436).

11. Agencement d'entretoise (300) selon l'une quelconque des revendications précédentes, dans lequel au moins un dispositif de pression (301, 302 ; 601 ; 701, 702, 703 ; 801, 802, 803, 804) comprend au moins l'un parmi :
un élément vis entrant en contact avec chacun des deux éléments latéraux opposés (312, 313), ledit élément vis étant configuré pour appliquer une force de répulsion ou d'attraction entre les deux éléments latéraux opposés,
un agencement d'engrenage à vis sans fin entrant en contact avec chacun des deux éléments latéraux opposés, ledit agencement d'engrenage à vis sans fin étant configuré pour appliquer une force de répulsion ou d'attraction entre les deux éléments latéraux opposés (312, 313), et
un agencement came-ressort entrant en contact avec chacun des deux éléments latéraux opposés, ledit agencement came-ressort étant configuré pour appliquer une force de répulsion ou d'attraction entre les deux éléments latéraux opposés (312, 313).

12. Procédé d'installation d'un appareil de choc et de traction (200) et de l'agencement d'entretoise (300) selon l'une quelconque des revendications précédentes dans un compartiment de montage (110) d'un véhicule ferroviaire, le procédé comprenant :
le placement de l'agencement d'entretoise (300) dans le compartiment de montage (110) de sorte qu'un premier côté court (382 ; 383) respectif de chacun des deux éléments latéraux opposés (312, 313) entre en contact avec l'au moins une surface de support (111a ; 111b) du compartiment de montage (110),
l'assujettissement de l'agencement d'entretoise (300) à des première et deuxième parois latérales (112 ; 113) du compartiment de montage (110) par l'intermédiaire d'un ensemble d'éléments de montage (362 ; 363), **caractérisé par** :
le positionnement de l'appareil de choc et de traction (200) dans le compartiment de montage (110) de telle sorte qu'une partie la plus interne (205) de l'appareil de choc et de traction (200) entre en contact avec un deuxième côté court (392 ; 393) respectif de chacun des deux éléments latéraux opposés (312, 313), lesdits deuxièmes côtés courts (392 ; 393) étant situés sur des côtés opposés respectifs des éléments latéraux opposés (312, 313) par rapport auxdits premiers côtés courts (382 ; 383) ;
le raccordement de la partie la plus interne (205) de l'appareil de choc et de traction (200) aux deuxièmes côtés courts (392 ; 393) des deux éléments latéraux opposés (312, 313) ; et
le réglage de l'au moins un dispositif de pression (301, 302 ; 601 ; 701, 702, 703 ; 801, 802, 803, 804) pour appliquer une force de prétension entre les deux éléments latéraux opposés (312 ; 313).

13. Procédé selon la revendication 12, dans lequel les deuxièmes côtés courts (392 ; 393) des deux éléments latéraux opposés (312, 313) comprennent une première interface nervure/rainure (352 ; 353) respective, la partie la plus interne (205) de l'appareil de choc et de traction (200) comprend une deuxième interface nervure/rainure (412, 413) configurée pour être adaptée dans la première interface nervure/rainure (352 ; 353) respective, et le raccordement de la partie la plus interne (205) de l'appareil de choc et de traction (200) aux deuxièmes côtés courts (392 ; 393) des deux éléments latéraux opposés (312, 313) comprend :
l'adaptation des première et deuxième interfaces nervure/rainure (352, 353 ; 412, 413) l'une dans l'autre.
